# EUROPÄISCHE PATENTSCHRIFT

(11) **EP 4 114 881 B1**
(45) Veröffentlichungstag und Bekanntmachung des Hinweises auf die Patenterteilung: **31.01.2024**
(21) Anmeldenummer: 21707700.7
(22) Anmeldetag: 26.02.2021
(51) Int. Cl.: C08G 18/38, C08G 18/42

(54) **VERFAHREN ZUR HERSTELLUNG VON ETHERESTEROLS**
METHOD FOR PRODUCING AN ETHER ESTOL
PROCÉDÉ DE FABRICATION D'UN ÉTHERESTÉROL

(30) Priorität: 03.03.2020 EP 20160554
(43) Veröffentlichungstag der Anmeldung: 11.01.2023
(73) Patentinhaber: Covestro Deutschland AG, 51373 Leverkusen (DE)
(72) Erfinder: WOLF, Aurel, 42489 Wülfrath (DE); MACHAT, Martin, 50735 Köln (DE); GUERTLER, Christoph, 50735 Köln (DE)
(74) Vertreter: Levpat
(86) Internationale Anmeldenummer: PCT/EP2021/054879
(87) Internationale Veröffentlichungsnummer: WO 2021/175722

(56) Entgegenhaltungen:
- EP-A1- 2 794 798
- EP-A2- 2 791 203
- DE-A1- 3 621 039

## Beschreibung

Gegenstand der Erfindung ist ein Verfahren zur Herstellung eines Etheresterols, bevorzugt eines Polyetheresterols, durch Umsetzung einer H-funktionellen Startersubstanz (1) mit einem cyclischen Anhydrid (2) und einem Alkylenoxid (3) in Gegenwart eines Katalysators (4). Ein weiterer Gegenstand sind Etheresterole, bevorzugt Polyetheresterole erhältlich nach dem erfindungsgemäßen Verfahren.

In DE 2142161 wird ein Verfahren zur Herstellung von flexiblen Polyurethanschäumen auf Basis von esterhaltigen Polyetherpolyolen offenbart, wobei die esterhaltigen Polyetherpolyole durch eine sequenzielle Reaktion hergestellt werden, basierend auf der Umsetzung von cyclischen Anhydriden mit Polyolen gefolgt von einer Ethoxylierung, um die Säurezahl zu reduzieren.

In US 4,582,926 wird ein Verfahrens zur Herstellung von Polyestern oder Polysterpolyolen durch Umsetzung von Polyolen mit cyclischen Carbonsäureanhydriden in Gegenwart von Katalysatoren zu Halbestern offenbart, wobei diese Halbester nachfolgend mit Ethylenoxid zu Reaktionsprodukten umgesetzt werden. Hierbei erfolgt die Zugabe der meist Amin-basierten Katalysatoren vor Zugabe des Alkylenoxids.

In DE3621039 A1 wird ein Verfahren zur Herstellung von niederviskosen, Hydroxylgruppen aufweisenden Oligoestern offenbart, wobei diese durch Umsetzung von mehrwertigen Alkoholen oder Dialkanolaminen mit cyclischen Carbonsäureanhydriden in Gegenwart von Amin-basierten Katalysatoren und anschließender Alkoxylierung der Halbester mit Ethylenoxid und/oder Propylenoxid erhalten werden. Die Amin-Katalysatoren werden hierbei ebenfalls in der Synthese des Halbesters oder vor Umsetzung mit den Alkylenoxiden zugesetzt.

In WO 2011/137011 A1 wird ein Verfahren zur Herstellung von Polyester-Polyether Polyolen durch Umsetzung einer Carboxyl-Gruppen haltigen Komponente, eines Polyols mit einem Alkylenoxid in Gegenwart eines Doppelmetallcyanid-Katalysators, einer Supersäure oder das Salz einer Supersäure als Katalysator oder eine tertiären Amin-Katalysators offenbart, wobei die Amin-Katalysatoren ebenfalls in der Synthese des Halbesters oder vor Umsetzung mit den Alkylenoxiden zugesetzt werden.

WO 2011/000560 A1 offenbart ein dreistufiges Verfahren zur Herstellung von Polyetheresterpolyolen mit primären Hydroxyl-Endgruppen, umfassend die Schritte der Reaktion einer aktive Wasserstoffatome aufweisenden Starterverbindung mit einem Epoxid unter Doppelmetallcyanid-Katalyse, der Reaktion des erhaltenen Produktes mit einem zyklischen Carbonsäureanhydrid sowie der Reaktion dieses erhaltenen Produktes mit Ethylenoxid in Gegenwart eines Katalysators, welcher pro Molekül mindestens ein Stickstoffatom umfasst, wobei nichtzyklische, identisch substituierte tertiäre Amine ausgenommen sind.

Aufgabe der vorliegenden Anmeldung war ein effizientes und einfach-aufskalierbares Verfahren zur Herstellung von Etheresterolen bevorzugt Polyetheresterolen mit verbesserter Verfahrenskontrolle bereitzustellen, bei der das Produkt in möglichst wenigen Herstellungsschritten bereitgestellt werden kann. Darüber hinaus sollen die Viskosität der resultierenden Etheresterol- bevorzugt der Polyetheresterol-Produkte gegenüber Stand der Technik Systemen für definierte Zusammensetzung und gegebene OH-Zahl (Hydroxylzahl) reduziert werden oder gar eine Kristallisation der Etheresterole vermieden werden. Somit soll ermöglicht werden, dass diese Produkte direkt oder mindestens vereinfacht in der nachfolgenden Polyurethan (PU)-Herstellung, bevorzugt PU-Hartschaumherstellung als Monol oder Polyol-Komponente eingesetzt werden können. Darüber hinaus soll auch der Umsatz der eingesetzten Edukte verbessert werden, beispielsweise Erhöhung des Umsatzes an Alkylenoxid, um die aufwendige Abtrennung, Aufreinigung und Wiederverwendung bzw. Entsorgung dieser teilweise toxischen Ausgangsstoffe zu reduzieren.

Überraschend wurde gefunden, dass die erfindungsgemäße Aufgabe gelöst wird durch ein Verfahren zur Herstellung eines Etheresterols, bevorzugt eines Polyetheresterols, durch Umsetzung einer H-funktionellen Startersubstanz (1) mit einem cyclischen Anhydrid (2) und einem Alkylenoxid (3) in Gegenwart eines Katalysators (4), wobei das Alkylenoxid (3) in der Gesamtmenge (m3) in mindestens zwei Teilmengen (m3-1) und (m3-2) zugegeben wird;
wobei der Katalysator (4) in der Gesamtmenge (m4) in mindestens einer Teilmenge (m4-2) zugegeben wird;
wobei die Teilmenge (m4-2) des Katalysators (4) zeitlich nach der ersten Teilmenge (m3-1) des Alkylenoxids (4) zugegeben wird;
und wobei die Zugabe der Gesamtmenge (m4) des Katalysators (4) zeitlich vor der Zugabe der Gesamtmenge (m3) des Alkylenoxids (3) abgeschlossen ist;
und wobei der Katalysator (4) ein tertiäres Amin ist.

Unter erfindungsgemäßen Etheresterolen sind Verbindungen zu verstehen, welche ein oder mehrere Etherfunktionalitäten (Ethergruppen), einer oder mehrere Esterfunktionalitäten (Estergruppen) sowie eine oder mehrere Hydroxylfunktionalitäten (Monole oder Polyole) aufweist. Die Etherfunktionalitäten resultieren hierbei durch Ringöffnung des Alkylenoxids (3) und Anlagerung mindestens von zwei oder mehreren Alkylenoxiden an eine H-funktioneller Startersubstanz (1). Die Esterfunktionalitäten werden beispielsweise durch Ringöffnung des cyclischen Anhydrids (2) und Umsetzung mit einer Hydroxylgruppen-enthaltenden Verbindung wie H-funktionelle Startersubstanz (1) mit terminalen Hydroxylgruppen gebildet. Die Hydroxylfunktionalitäten (Monole oder Polyole) resultieren infolge der Ringöffnung des Alkylenoxids (3) und Anlagerung an H-funktionelle Startersubstanz (1) und/oder an durch Ringöffnung der cyclischen Anhydride (2) gebildeten Halbestern. Die Anzahl der jeweiligen Ether-, Ester- und Hydroxylfunktionalitäten, vorrangig von Ether- und Ester Funktionalitäten ist erfindungsgemäß abhängig vom Stoffmengenverhältnis der H-funktioneller Startersubstanz (1), des cyclischen Anhydrids (2) und des verwendeten Alkylenoxid (3). Darüber hinaus ist die Hydroxylfunktionalität (Mono-oder Polyol) stark abhängig von der Funktionalität der eingesetzten H-funktionellen Startersubstanz (1). Darüber hinaus können auch zusätzliche Imidfunktionalitäten oder Amidfunktionalitäten bei Verwendung einer NH-funktionellen Startersubstanz (1-3) oder einer NH2-funktionellen Startersubstanz (1-2) gebildet werden.

Erfindungsgemäß hat ein Polyetheresterol eine oder mehrere bevorzugt mehrere Etherfunktionalitäten, eine oder mehrere bevorzugt mehrere Esterfunktionalitäten sowie eine oder mehrere bevorzugt mehrere Hydroxylfunktionalitäten, welche statistisch und/oder blockweise über das Polyetheresterol verteilt sein können.

In einer Ausführungsform des erfindungsgemäßen Verfahrens ist die H-funktionelle Startersubstanz (1) eine OH-funktionelle Startersubstanz(1-1), eine NH₂-funktionelle Startersubstanz (1-2), eine NH-funktionelle Startersubstanz (1-3) und/oder eine COOH funktionelle Startersubstanz (1-4) bevorzugt eine OH-funktionelle Startersubstanz (1-1).

Hierbei ist unter einer OH-funktionellen Startersubstanz (1-1) eine Verbindung mit mindestens einer freien Hydroxylgruppe, eine NH₂-funktionelle Startersubstanz (1-2) mit mindestens einer primären Amin Gruppe, eine NH-funktionelle Startersubstanz (1-3) mit mindestens einer sekundären Amin Gruppe und/oder eine COOH funktionelle Startersubstanz (1-4) mit mindestens einer freien Carboxylgruppe zu verstehen.

Als H-funktionelle Startersubstanz können beispielsweise eine oder mehrere Verbindungen ausgewählt werden aus der Gruppe umfassend Wasser bzw. ein- oder mehrwertige Alkohole, ein- oder mehrwertige Carbonsäuren, Hydroxycarbonsäuren, Hydroxyester, Polyetherpolyole, Polyesterpolyole, Polyesteretherpolyole, Polyethercarbonatpolyole, Polyetherestercarbonatpolyole, Polycarbonatpolyole, Polycarbonate, Polytetrahydrofurane (z.B. PolyTHFO der BASF, wie z.B. PolyTHFO 250, 650S, 1000, 1000S, 1400, 1800, 2000), Polyacrylatpolyole, Ricinusöl, das Mono-oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance^{®} (Fa. BASF AG), Merginol^{®}-Typen (Fa. Hobum Oleochemicals GmbH), Sovermol^{®}-Typen (Fa. Cognis Deutschland GmbH & Co. KG) und Soyol^{®}TM-Typen (Fa. USSC Co.).

Als monofunktionelle Startersubstanzen können Alkohole, Thiole und Carbonsäuren eingesetzt werden. Als monofunktionelle Alkohole können Verwendung finden: Methanol, Ethanol, Ethenol, 1-Propanol, 2-Propanol, 2-Propenol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, 1-Dodecanol, Palmerol, 1-Hexadecanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin.

Geeignete mehrwertige Alkohole als OH-funktionelle Startersubstanzen (1-1) mit mindestens zwei terminalen Hydroxylgruppen sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis(2-hydroxyethyl) terephthalat, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Als NH₂-funktionelle Startersubstanzen (1-2) sind beispielsweise Butylamin, tert-Butylamin, Pentylamin, Hexylamin, Anilin, Aziridin, Pyrrolidin, Piperidin, Morpholin, Pentamethylendiamin (PDA), Hexamethylendiamin (HDA), Isomorphondiamin(IPDA), Toluoldiamin (TDA) einschließlich der bekannten Regiosisomere 2,4-TDA, 2,6-TDA, 2,3-TDA und 3,4-TDA sowie Diaminodiphenylmethan (MDA) einschließlich der bekannten Regioisomere 2,4`-MDA und 4,4`-MDA zu nennen.

Als NH-funktionelle Startersubstanzen (1-3) sind Derivate des Ammoniaks mit Alkyl und / oder Arylsubstituenten, wie beispielsweise Dimethylamin, Diethylamin, Diispropylamlin, Dibutylamin, Ditertbutylamin, Dipentylamin, Dihexylamin, Diphenylamin, zu nennen. Darüber hinaus sind Verbindungen mit mehreren NH-Funktionalitäten möglich.

Als einwertige Carbonsäuren als COOH-funktionelle Startersubstanz (1-4) mit einer freien Carboxylgruppe eignen sich Methansäure, Ethansäure, Propansäure, Butansäure, Pentansäure, Hexansäure, Heptansäure, Octansäure, Milchsäure, Stearinsäure, Palmitinsäure, Ölsäure, Linolsäure, Linolensäure, Benzoesäure, Acrylsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure und Benzoesäure. Darüber hinaus können Gemische aus Fettsäure-/Fettalkohol eingesetzt werden, bevorzugt C10-C18.

Als mehrwertige Carbonsäuren als COOH funktionelle Startersubstanz (1-4) mit mindestens zwei Carboxygruppen eignen sich Oxalsäure, Malonsäure, Bernsteinsäure, Glutarsäure, Adipinsäure, Pimelinsäure, Korksäure, Azelainsäure, Sebacinsäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure.

Als H-funktionelle Startersubstanzen geeignete Hydroxycarbonsäuren einwertige Carbonsäuren als COOH funktionelle Startersubstanz (1-4) mit mindestens einer freien Carboxylgruppe sind beispielsweise Ricinolsäure, Glycolsäure, Milchsäure, 3-Hydroxypropionsäure, Äpfelsäure, Zitronensäure, Mandelsäure, Tartronsäure, Weinsäure, Mevalonsäure, 4-Hydroxybuttersäure, Salicylsäure, 4-Hyroxybenzoesäure und Isocitronensäure.

Die H-funktionellen Startersubstanzen (1) können auch aus der Substanzklasse der Polyetherpolyole ausgewählt sein, insbesondere solchen mit einem Molekulargewicht Mn im Bereich von 50 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen^{®}-, Acclaim^{®}-, Arcol^{®}-, Baycoll^{®}-, Bayfill^{®}-, Bayflex^{®}-Baygal^{®}-, PETO- und Polyether-Polyole der Covestro AG (wie z. B. Desmophen^{®} 3600Z, Desmophen^{®} 1900U, Acclaim^{®} Polyol 2200, Acclaim^{®} Polyol 4000I, Arcol^{®} Polyol 1004, Arcol^{®} Polyol 1010, Arcol^{®} Polyol 1030, Arcol^{®} Polyol 1070, Baycoll^{®} BD 1110, Bayfill^{®} VPPU 0789, Baygal^{®} K55, PET^{®} 1004, Polyether^{®} S180). Weitere geeignete homo-Polyethylenoxide sind beispielsweise die Pluriol^{®} E-Marken der BASF SE, geeignete homo-Polypropylenoxide sind beispielsweise die Pluriol^{®} P-Marken der BASF SE, geeignete gemischte Copolymere aus Ethylenoxid und Propylenoxid sind beispielsweise die Pluronic^{®} PE oder Pluriol^{®} RPE-Marken der BASF SE.

Die H-funktionellen Startersubstanzen (1) können auch aus der Substanzklasse der Polyesterpolyole ausgewählt sein, insbesondere solchen mit einem Molekulargewicht Mn im Bereich von 50 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Bernsteinsäureanhydrid, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Die resultierenden Polyesterpolyole weisen hierbei terminale Hydroxy und/oder Carboxygruppen auf.

Des Weiteren können als H-funktionelle Startersubstanzen (1) Polycarbonatdiole eingesetzt werden, insbesondere solche mit einem Molekulargewicht Mn im Bereich von 50 bis 4500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen^{®} C-Typen der CovestroAG verwendet werden, wie z.B. Desmophen^{®} C 1100 oder Desmophen^{®} C 2200.

In einer weiteren Ausführungsform der Erfindung können Polyethercarbonatpolyole (z.B. cardyon^{®} Polyole der Fa. Covestro), Polycarbonatpolyole (z.B. Converge^{®} Polyole der Fa. Novomer / Saudi Aramco, NEOSPOL Polyole der Fa. Repsol etc.) und/oder Polyetherestercarbonatpolyole als H-funktionelle Starterverbindungen eingesetzt werden. Insbesondere können Polyethercarbonatpolyole, Polycarbonatpolyole und/oder Polyetherestercarbonatpolyole durch Umsetzung von Alkylenoxiden, bevorzugt Ethylenoxid, Propylenoxid oder deren Mischungen, optional weiteren Co-Monomeren mit CO2 in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO2 gibt zum Beispiel Chemical Communications 47 (2011) 141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden.

Die H-funktionellen Startersubstanzen (1) weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Startersubstanzen werden entweder einzeln oder als Gemisch aus mindestens zwei H-funktionellen Startersubstanzen eingesetzt.

Bevorzugte H-funktionelle Startersubstanzen sind Alkohole mit einer Zusammensetzung nach der allgemeinen Formel (1),

HO-(CH2)_{X}-OH (1)

wobei x eine Zahl von 1 bis 20, bevorzugt eine gerade Zahl von 2 bis 20 ist. Beispiele für Alkohole gemäß Formel (1) sind Ethylenglycol, 1,4-Butandiol, 1,6-Hexandiol, 1,8-Octandiol, 1,10 Decandiol und 1,12-Dodecandiol. Weitere bevorzugte H-funktionelle Startersubstanzen sind Neopentylglykol, Trimethylolpropan, Glycerin und Pentaerythrit.

Weiterhin bevorzugt werden als H-funktionelle Startersubstanzen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei OH-funktionelle Startersubstanz (1-1) um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt eine OH-Funktionalität von 2 bis 4 und ein Molekulargewicht Mn im Bereich von 62 bis 4500 g/mol und insbesondere ein Molekulargewicht Mn im Bereich von 62 bis 3000 g/mol.

In einer Ausführungsform des erfindungsgemäßen Verfahrens beträgt OH-Funktionalität von 2 bis 6 und ein Molekulargewicht von 18 g/mol bis 2000 g/mol, bevorzugt von 2 bis 4 und bevorzugt von 60 g/mol bis 1000 g/mol auf.

In einer Ausführungsform des erfindungsgemäßen Verfahrens ist die H-funktionelle Startersubstanz ein oder mehrere Verbindung(en) und ausgewählt wird aus der Gruppe bestehend aus Wasser, Ethylenglycol, Diethylenglycol, Polyethylenglycol, Dipropylenglykol, Polypropylenglycol, 1,3-Butandiol, 1,4-Butandiol 1,1,1-Trimethylolpropan, Glycerin, Pentaerythritol, Sorbitol, Saccarose, Xylitol, 1,2-Propandiol, 1,3-Propandiol, Bernsteinsäure, Adipinsäure, Glutarsäure, Pimelinsäure, Maleinsäure, Phthalsäure, Terephtalsäure, Milchsäure, Zitronensäure, Salicylsäure und Ester der vorgenannten Alkohole und Säuren.

Cyclische Anhydride sind cyclische Verbindungen enthaltend eine Anhydridgruppe im Ring. Bevorzugte Verbindungen sind Succinsäureanhydrid (Bernsteinsäureanhydrid), Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Glutarsäureanhydrid, Diglykolsäureanhydrid, 1,8-Naphthalsäureanhydrid, Succinsäureanhydrid (Bernsteinsäureanhydrid), Dodecenylbernsteinsäureanhydrid, Tetradeceny¬bernsteinsäureanhydrid, Hexadecenylbernsteinsäure-anhydrid, Octadecenylbernsteisäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid (Bernsteinsäureanhydrid), Maleinsäureanhydrid und Phthalsäureanhydrid.

In dem erfindungsgemäßen Verfahren können als Alkylenoxide (3) Alkylenoxide mit 2-45 Kohlenstoffatomen eingesetzt werden. Bei den Alkylenoxiden mit 2 - 45 Kohlenstoffatomen handelt es sich beispielsweise um eine oder mehrere Verbindungen ausgewählt aus der Gruppe umfassend Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Alkylenoxide von C6-C22 α-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether. Vorzugsweise werden als Alkylenoxide Ethylenoxid und/oder Propylenoxid, besonders bevorzugt Ethylenoxid als Alkylenoxid (3) eingesetzt.

Werden Ethylenoxid und Propylenoxid in Mischung eingesetzt, so beträgt das molare Verhältnis von Ethylenoxid zu Propylenoxid von 1:99 bis 99:1, bevorzugt von 95:5 bis 50:50.

In einer Ausführungsform des erfindungsgemäßen Verfahrens wird das cyclische Alkylenoxid (3) kontinuierlich oder stufenweise in den Reaktor zugegeben.

Im erfindungsgemäßen Verfahren wird ein tertiäres Amin als Katalysator (4) verwendet.

Tertiäre Amine sind entsprechend des allgemeinen Fachwissens Derivate des Ammoniaks mit tertiären Amin-Gruppen, bei denen alle 3 Wasserstoffatome durch Alkyl-, Cycloalkyl-, Aryl Gruppen ersetzt worden sind, wobei diese Alkyl-, Cycloalkyl-, Aryl-Gruppen identisch oder verschieden sein können, sich auch zu ein- oder mehrkernigen heterocyclischen Ringsystemen zusammenschließen. Darüber hinaus können die tertiären Amine auch mehrere tertiäre Amin-Gruppen enthalten. Die erfindungsgemäßen tertiären Amine können auch weitere Heteroatome wie beispielsweise Sauerstoff enthalten.

In einer Ausführungsform des erfindungsgemäßen Verfahrens ist das tertiäre Amin eine oder mehrere Verbindung(en) und wird ausgewählt aus der Gruppe bestehend aus Trimethylamin Triethylendiamin, Tripropylamin, Tributylamin, Tripentylamin, Trihexylamin, Triphenylamin, Dimethylethylamin, N,N-Dimethylcyclohexylamin, Tetramethylendiamin, 1-Methyl-4-dimethylaminoethylpiperazin, Triethylamin, Tripopylamin, Tributylamin, Dimethylbutylamin, N,N-Dimethylbenzylamin, N,N-Dimethylcyclohexylamin, N,N',N"-Tris-(dimethylaminopropyl)-hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, Bis-(dimethylaminoethyl)-ether N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, 1,8-Diazabicyclo[5.4.0]undec-7-en (DBU), 1,5,7-Triazabicyclo[4.4.0]dec-5-en (TBD), 1,4-Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol und N,N-dimethylaminopyridin, Guanidin, 1,1,3,3,-Tetramethylguanidin, Pyridin, 1-Azanaphthalin (Chinolin), N-Methylpiperidin, N-Methylmorpholin, N, N'-Dimethylpiperazin und N,N-Dimethylanilin.

In einer bevorzugten Ausführungsform des erfindungsgemäßen Verfahrens ist der Amin-Katalysator eine oder mehrere Verbindung(en) und wird ausgewählt aus der Gruppe bestehend aus Benzyldimethylamin, N,N-Dimethylcyclohexylamin, Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, und 4(5)Phenylimidazol.

In einer Ausführungsform des erfindungsgemäßen Verfahrens wird der Amin-Katalysator in einer Menge von 10 - 50000 ppm (bezogen auf die Gesamtmasse des Produktes) eingesetzt, bevorzugt 100 - 10000 ppm.

Gemäß der gängigen fachlichen Definition ist unter einem Lösungsmittel eine oder mehrere Verbindungen zu verstehen, die die H-funktionelle Starterverbindung (1), das cyclische Anhydrid (2), das Alkylenoxid (3) und/oder den Katalysator (4) lösen ohne jedoch selbst mit der H-funktionellen Starterverbindung (1), dem cyclischen Anhydrid (2), dem Alkylenoxid (3) und/oder dem Katalysator (4) zu reagieren.

In einer Ausführungsform wird das erfindungsgemäße Verfahren ohne Zusatz eines Lösungsmittels durchgeführt, so dass dieses nach der Herstellung des Etheresterols, bevorzugt des Polyetheresterols nicht in einem zusätzlichen Verfahrensschritt abgetrennt werden muss.

In einer Ausführungsform umfasst das erfindungsgemäße Verfahren folgende Schritte
i) Umsetzen der H-funktionellen Startersubstanz (1) des cyclischen Anhydrids (2) und der ersten Teilmenge (m3-1) des Alkylenoxids (3) unter Bildung eines Gemisches (i)
ii) Zugabe der Teilmenge (m4-2) des Katalysators (4) zur Verbindung (i) unter Bildung einer Mischung (ii)
iii) Umsetzen der Mischung (ii) mit der zweiten Teilmenge (m3-2) des Alkylenoxids (3) unter Bildung des Etheresterols, bevorzugt eines Polyetheresterols.

In einer bevorzugten Ausführungsform des erfindungsgemäßen wird eine Teilmenge (m4-1) des Katalysators (4) in Schritt i) zugegeben, wodurch eine weitere Reduktion der Viskosität des Etheresterols, bevorzugt eines Polyetheresterols erzielt wird.

In einer alternativen Ausführungsform umfasst das erfindungsgemäße Verfahren folgende Schritte
α) Umsetzen der Startersubstanz (1) und des cyclischen Anhydrids (2) unter Bildung eines Gemisches (α)
(3) Zugabe der ersten Teilmenge (m3-1) des Alkylenoxids (3) zur Komponente (α) unter Bildung einer Verbindung ((3)
γ) Zugabe der Teilmenge (m4-2) des Katalysators (4) zur Verbindung ((3) unter Bildung einer Mischung (γ)
δ) Umsetzen der Mischung (γ) mit der zweiten Teilmenge (m3-2) des Alkylenoxids (3) unter Bildung des Etheresterols, bevorzugt eines Polyetheresterols.

In einer bevorzugten Ausführungsform des erfindungsgemäßen wird eine Teilmenge (m4-1) des Katalysators (4) in Schritt α) zugegeben, wodurch eine weitere Reduktion der Viskosität des Etheresterols, bevorzugt eines Polyetheresterols erzielt wird.

In einer Ausführungsform des erfindungsgemäßen Verfahrens werden für die vorgenannten Verfahrensalternativen 50,1 mol-% bis 100 mol-% bevorzugt 60 mol-% bis 100 mol-% der Teilmenge (m4-2) des Katalysators bezogen auf die Summe der Teilmenge (m4-1) und Teilmenge (m4-2) zugegeben.

Hierbei kann das in Teilmenge (m4-1) zugegebene tertiäre Amin identisch oder verschieden von dem als Teilmenge (m4-2) zugegebenen tertiären Amin sein. Bevorzugt sind die zugegebenen Amine identisch.

In einer Ausführungsform des erfindungsgemäßen Verfahrens ist das Stoffmengenverhältnis des cyclischen Anhydrids (2) zur Starterfunktionalität der H-funktionellen Startersubstanz (1) zwischen 0,5 zu 1 bis 20 zu 1, bevorzugt zwischen 0,5 zu 1 bis 10 zu 1.

In einer Ausführungsform des erfindungsgemäßen Verfahrens ist die H-funktionelle Startersubstanz (1) eine OH-funktionelle Startersubstanz (1-1) mit terminalen Hydoxylgruppen und das Stoffmengenverhältnis des Alkylenoxids (3) zum cyclischen Anhydrid (2) ist von 1,05 zu 1 bis 3,0 zu 1 , bevorzugt von 1,1 zu 1 bis 2,0 zu 1.

In einer Ausführungsform des erfindungsgemäßen Verfahrens ist die H-funktionelle Startersubstanz (1) eine OH-funktionelle Startersubstanz (1-1) mit terminalen Hydroxylgruppen ist und das Stoffmengenverhältnis des Alkylenoxids (3) zum cyclischen Anhydrid (2) von 1,05 zu 1 bis 3,0 zu 1 , bevorzugt von 1,1 zu 1 bis 2,0 zu 1.

In einer Ausführungsform des erfindungsgemäßen Verfahrens ist die Teilmenge (m3-1) 10 bis 95 mol-%, bevorzugt 30 bis 85 mol% bezogen auf die Summe der Teilmengen (m3-1) und (m3-2) des Alkylenoxids (3).

Hierbei kann das in Teilmenge (m3-1) zugegebene Alkylenoxid identisch oder verschieden von dem als Teilmenge (m3-2) zugegebene Alkylenoxid sein. Bevorzugt sind die zugegebenen Alkylenoxide identisch.

In einer weiteren Ausführungsform des erfindungsgemäßen Verfahrens wird die H-funktionelle Startersubstanz (1) kontinuierlich in den Reaktor zugegeben.

In einer weiteren Ausführungsform des erfindungsgemäßen Verfahrens wird das cyclische Anhydrid (2) kontinuierlich oder stufenweise in den Reaktor zugegeben.

In einer weiteren Ausführungsform des erfindungsgemäßen Verfahrens wird das cyclische Alkylenoxid (3) kontinuierlich oder stufenweise in den Reaktor zugegeben.

In einer weiteren Ausführungsform des erfindungsgemäßen Verfahrens wird der Katalysator (4) kontinuierlich oder stufenweise in den Reaktor zugegeben.

In einer weiteren Ausführungsform des erfindungsgemäßen Verfahrens wird in Schritt i) die H-funktionelle Startersubstanz (1) im Reaktor vorgelegt und das cyclische Anhydrid (2) stufenweise oder kontinuierlich in den Reaktor zugegeben.

In einer weiteren alternativen Ausführungsform des erfindungsgemäßen Verfahrens wird in Schritt i) das cyclische Anhydrid (2) im Reaktor vorgelegt und die H-funktionelle Startersubstanz (1) stufenweise oder kontinuierlich in den Reaktor zugegeben.

In einer weiteren alternativen Ausführungsform des erfindungsgemäßen Verfahrens wird das Polyesterpolyol kontinuierlich oder stufenweise, bevorzugt kontinuierlich aus dem Reaktor entnommen.

Ein weiterer Gegenstand der vorliegenden Erfindung ist ein Etheresterol bevorzugt ein Polyetheresterol erhältlich nach dem vorgeschriebenen erfindungsgemäßen Verfahren.

In einer Ausführungsform weist das erfindungsgemäße Etheresterol bevorzugt ein Polyetheresterol ein zahlenmittleren Molekulargewicht von 70 g/mol bis 10000 g/mol, bevorzugt von 80 g/mol bis 5000 g/mol, wobei das zahlenmittlere Molekulargewicht mittels der im Experimentalteil offenbarten Gel-Permeations-Chromatographie (GPC) bestimmt wird.

Ein weiterer Gegenstand der vorliegenden Erfindung ist ein Verfahren zur Herstellung eines Polyurethans durch Umsetzung des erfindungsgemäßen Etheresterols bevorzugt ein Polyetheresterols mit einem Polyisocyanat.

Das Polyisocyanat kann ein aliphatisches oder aromatisches Polyisocyanat sein. Beispiele sind 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1 bis C6-Alkylgruppen. Bevorzugt ist hierbei ein Isocyanat aus der Diphenylmethandiisocyanatreihe.

Neben den vorstehend genannten Polyisocyanaten können anteilig auch modifizierte Diisocyanate mit Uretdion-, Isocyanurat-, Urethan-, Carbodiimid, Uretonimin, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül wie zum Beispiel 4-Isocyanatomethyl-1,8-octandiisocyanat (Nonantriisocyanat) oder Triphenylmethan-4,4',4"-triisocyanat mit eingesetzt werden.

In einer ersten Ausführungsform betrifft die Erfindung ein Verfahren zur Herstellung eines Etheresterols, bevorzugt eines Polyetheresterols, durch Umsetzung einer H-funktionellen Startersubstanz (1) mit einem cyclischen Anhydrid (2) und einem Alkylenoxid (3) in Gegenwart eines Katalysators (4), wobei das Alkylenoxid (3) in der Gesamtmenge (m3) in mindestens zwei Teilmengen (m3-1) und (m3-2) zugegeben wird;
wobei der Katalysator (4) in der Gesamtmenge (m4) in mindestens einer Teilmenge (m4-2) zugegeben wird;
wobei die Teilmenge (m4-2) des Katalysators (4) zeitlich nach der ersten Teilmenge (m3-1) des Alkylenoxids (4) zugegeben wird;
und wobei die Zugabe der Gesamtmenge (m4) des Katalysators (4) zeitlich vor der Zugabe der Gesamtmenge (m3) des Alkylenoxids (3) abgeschlossen ist;
Und wobei der Katalysator (4) ein tertiäres Amin ist.

In einer zweiten Ausführungsform betrifft die Erfindung ein Verfahren gemäß der ersten Ausführungsform umfassend folgende Schritte
i) Umsetzen der H-funktionellen Startersubstanz (1) des cyclischen Anhydrids (2) und der ersten Teilmenge (m3-1) des Alkylenoxids (3) unter Bildung eines Gemisches (i)
ii) Zugabe der Teilmenge (m4-2) des Katalysators (4) zur Verbindung (i) unter Bildung einer Mischung (ii)
iii) Umsetzen der Mischung (ii) mit der zweiten Teilmenge (m3-2) des Alkylenoxids (3) unter Bildung des Etheresterols, bevorzugt eines Polyetheresterols.

In einer dritten Ausführungsform betrifft die Erfindung ein Verfahren gemäß der zweiten Ausführungsform, wobei eine Teilmenge (m4-1) des Katalysators (4) in Schritt i) zugegeben wird.

In einer vierten Ausführungsform betrifft die Erfindung ein Verfahren gemäß der ersten Ausführungsform umfassend
α) Umsetzen der Startersubstanz (1) und des cyclischen Anhydrids (2) unter Bildung eines Gemisches (α)
(3) Zugabe der ersten Teilmenge (m3-1) des Alkylenoxids (3) zur Komponente (α) unter Bildung einer Verbindung ((3)
γ) Zugabe der Teilmenge (m4-2) des Katalysators (4) zur Verbindung ((3) unter Bildung einer Mischung (γ)
δ) Umsetzen der Mischung (γ) mit der zweiten Teilmenge (m3-2) des Alkylenoxids (3) unter Bildung des Etheresterols, bevorzugt eines Polyetheresterols.

In einer fünften Ausführungsform betrifft die Erfindung ein Verfahren gemäß der vierten Ausführungsform, wobei eine Teilmenge (m4-1) des Katalysators (4) in Schritt α) zugegeben wird.

In einer sechsten Ausführungsform betrifft die Erfindung ein Verfahren gemäß einer der dritten bis fünften Ausführungsform wobei 50,1 mol-% bis 100 mol-% bevorzugt 60 mol-% bis 100 mol-% der Teilmenge (m4-2) des Katalysators bezogen auf die Summe der Teilmenge (m4-1) und Teilmenge (m4-2) zugegeben wird.

In einer siebten Ausführungsform betrifft die Erfindung ein Verfahren gemäß einer der ersten bis sechsten Ausführungsform, wobei die H-funktionelle Startersubstanz (1) wobei die H-funktionelle Startersubstanz (1) eine OH-funktionelle Startersubstanz(1-1), eine NH2-funktionelle Startersubstanz (1-2), eine NH-funktionelle Startersubstanz (1-3) und/oder eine COOH funktionelle Startersubstanz (1-4) bevorzugt eine OH-funktionelle Startersubstanz (1-1) ist.

In einer achten Ausführungsform betrifft die Erfindung ein Verfahren gemäß einer der ersten bis siebten Ausführungsform, wobei das Alkylenoxid (3) Propylenoxid und/oder Ethylenoxid bevorzugt Ethylenoxid ist.

In einer neunten Ausführungsform betrifft die Erfindung ein Verfahren gemäß einer der ersten bis achten Ausführungsform, wobei das tertiäre Amin eine oder mehrere Verbindung(en) und wird ausgewählt aus der Gruppe bestehend aus Trimethylamin Triethylendiamin, Tripropylamin, Tributylamin, Tripentylamin, Trihexylamin, Triphenylamin, Dimethylethylamin, N,N-Dimethylcyclohexylamin, Tetramethylendiamin, 1-Methyl-4-dimethylaminoethylpiperazin, Triethylamin, Tripopylamin, Tributylamin, Dimethylbutylamin, N,N-Dimethylbenzylamin, N,N-Dimethylcyclohexylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, Bis-(dimethylaminoethyl)-ether N-Methylmorpholin, N-Ethylmorpholin, N-Cyclohexylmorpholin, 2,3-Dimethyl-3,4,5,6-tetrahydro-pyrimidin, Triethanolamin, Diethanolamin, Triisopropanolamin, N-Methyldiethanolamin, N-Ethyldiethanolamin, Dimethylethanolamin, 1,8-Diazabicyclo[5.4.0]undec-7-en (DBU), 1,5,7-Triazabicyclo[4.4.0]dec-5-en (TBD), 1,4-Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol und N,N-dimethylaminopyridin, Guanidin, 1,1,3,3,-Tetramethylguanidin, Pyridin, 1-Azanaphthalin (Chinolin), N-Methylpiperidin, N-Methylmorpholin, N, N'-Dimethylpiperazin und N,N-Dimethylanilin bevorzugt Benzyldimethylamin, N,N-Dimethylcyclohexylamin, Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, und 4(5)Phenylimidazol..

In einer zehnten Ausführungsform betrifft die Erfindung ein Verfahren gemäß einer der ersten bis neunten Ausführungsform, wobei das Stoffmengenverhältnis des cyclischen Anhydrids (2) zur Starterfunktionalität der H-funktionellen Startersubstanz (1) zwischen 0,5 zu 1 bis 20 zu 1, bevorzugt zwischen 0,5 zu 1 bis 10 zu 1 ist.

In einer elften Ausführungsform betrifft die Erfindung ein Verfahren gemäß einer der siebten bis zehnten Ausführungsform, die H-funktionelle Startersubstanz (1) eine OH-funktionelle Startersubstanz (1-1) mit terminalen Hydorxylgruppen ist und das Stoffmengenverhältnis des Alkylenoxids (3) zum cyclischen Anhydrid (2) von 1,05 zu 1 bis 3,0 zu 1 , bevorzugt von 1,1 zu 1 bis 2,0 zu 1 ist.

In einer zwölften Ausführungsform betrifft die Erfindung ein Verfahren gemäß einer der ersten bis elften Ausführungsform, wobei die H-funktionelle Startersubstanz (1) eine COOH-funktionelle Startersubstanz (1-4) mit Carboxylgruppen ist und das Stoffmengenverhältnis des Alkylenoxids (3) zum cyclischen Anhydrid (2) von 1,5 zu 1 bis 8,0 zu 1, bevorzugt von 1,8 zu 1 bis 5,0 zu 1 ist.

In einer dreizehnten Ausführungsform betrifft die Erfindung ein Verfahren gemäß einer der ersten bis zwölften Ausführungsform, wobei die Teilmenge (m3-1) 10 bis 95 mol-%, bevorzugt 30 bis 85 mol% bezogen auf die Summe der Teilmengen (m3-1) und (m3-2) des Alkylenoxids (3) sind.

In einer vierzehnten Ausführungsform betrifft die Erfindung ein Verfahren gemäß einer der ersten bis zwölften Ausführungsform, wobei kein Lösungsmittel verwendet wird.

In einer fünfzehnten Ausführungsform betrifft die Erfindung ein Verfahren gemäß einer der ersten bis vierzehnten Ausführungsform, wobei die H-funktionelle Startersubstanz (1) ein oder mehrere Verbindung(en) ist und ausgewählt wird aus der Gruppe bestehend aus Ethylenglycol, Diethylenglycol, Dipropylenglykol 1,3-Butandiol, 1,4-Butandiol 1,1,1-Trimethylolpropan, Glycerin, Pentaerythritol, Sorbitol, Saccarose, Xylitol, 1,2-Propandiol, 1,3-Propandiol, Bernsteinsäure, Adipinsäure, Glutarsäure, Pimelinsäure, Maleinsäure, Phthalsäure, Terephthalsäure, Milchsäure, Zitronensäure und Salicylsäure.

In einer fünfzehnten Ausführungsform betrifft die Erfindung ein Verfahren gemäß einer der ersten bis vierzehnten Ausführungsform, wobei das cyclische Anhydrid (2) eine oder mehrere Verbindung(en) ist und ausgewählt wird aus der Gruppe bestehend aus Bernsteinsäureanhydrid, Maleinsäureanhydrid, Phthalsäureanhydrid, 1,2-Cyclohexandicarbonsäureanhydrid, Diphensäure-anhydrid, Tetrahydro¬phthalsäureanhydrid, Methyltetra¬hydrophthalsäure¬anhydrid, Norbornendisäureanhydrid und ihre Chlorierungsprodukte, Bernsteinsäure¬anhydrid, Glutarsäure¬anhydrid, Diglykolsäureanhydrid, 1,8-Naphthalsäureanhydrid, Bernstein¬säure¬anhydrid, Dodecenyl¬bernsteinsäure¬anhydrid, Tetra¬decenyl¬bernstein¬säure¬anhydrid, Hexadecenylbernsteinsäure¬anhydrid, Octa¬decenyl¬bernstein¬säureanhydrid, 3- und 4-Nitrophthalsäureanhydrid, Tetrachlor¬phthalsäure¬anhydrid, Tetrabrom¬phthalsäureanhydrid, Itaconsäureanhydrid, Dimethyl-maleinsäure-anhydrid, Allylnorbornen¬disäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. bevorzugt Bernsteinsäureanhydrid, Maleinsäureanhydrid, und Phthalsäureanhydrid.

In einer sechzehnten Ausführungsform betrifft die Erfindung ein Verfahren gemäß einer der ersten bis fünfzehnten Ausführungsform, wobei die H-funktionellen Startersubstanz (1) kontinuierlich in den Reaktor zugegeben wird.

In einer siebzehnten Ausführungsform betrifft die Erfindung ein Verfahren gemäß einer der ersten bis sechzehnten Ausführungsform, wobei das cyclische Anhydrid (2) kontinuierlich oder stufenweise in den Reaktor zugegeben wird.

In einer achtzehnten Ausführungsform betrifft die Erfindung ein Verfahren gemäß einer der ersten bis siebzehnten Ausführungsform, wobei das cyclische Alkylenoxid (3) kontinuierlich oder stufenweise in den Reaktor zugegeben wird.

In einer neunzehnten Ausführungsform betrifft die Erfindung ein Verfahren gemäß einer der ersten bis siebzehnten Ausführungsform, wobei das tertiäre Amin als Katalysator (4) kontinuierlich oder stufenweise in den Reaktor zugegeben wird.

In einer zwanzigsten Ausführungsform betrifft die Erfindung ein Verfahren gemäß einer der ersten bis dritten und sechsten bis neunzehnten Ausführungsform, wobei in Schritt i) die H-funktionellen Startersubstanz (1) im Reaktor vorgelegt wird und das cyclische Anhydrid (2) stufenweise oder kontinuierlich in den Reaktor zugegeben wird.

In einer einundzwanzigsten Ausführungsform betrifft die Erfindung ein Verfahren gemäß einer der ersten bis dritten und sechsten bis zwanzigsten Ausführungsform, wobei in Schritt i) das cyclische Anhydrid (2) im Reaktor vorgelegt wird und die H-funktionellen Startersubstanz (1) stufenweise oder kontinuierlich in den Reaktor zugegeben wird.

In einer zweiundzwanzigsten Ausführungsform betrifft die Erfindung ein Verfahren gemäß einer der ersten bis dritten und sechsten bis einundzwanzigsten Ausführungsform, wobei in Schritt i) die erste Teilmenge (m3-1) des Alkylenoxids (3) kontinuierlich zugegeben wird.

In einer dreiundzwanzigsten Ausführungsform betrifft die Erfindung ein Verfahren gemäß einer der ersten bis dritten und sechsten bis zweiundzwanzigsten Ausführungsform, wobei in Schritt iii) die zweiteTeilmenge (m3-2) des Alkylenoxids (3) kontinuierlich zugegeben wird.

In einer vierundzwanzigsten Ausführungsform betrifft die Erfindung ein Verfahren gemäß einer der ersten und vierten bis einundzwanzigsten Ausführungsform, wobei in Schritt (3) die erste Teilmenge (m3-1) des Alkylenoxids (3) kontinuierlich zugegeben wird.

In einer fünfundzwanzigsten Ausführungsform betrifft die Erfindung ein Verfahren gemäß einer der ersten und vierten bis einundzwanzigsten und vierundzwanzigsten Ausführungsform, wobei in Schritt δ) die zweite Teilmenge (m3-2) des Alkylenoxids (3) kontinuierlich zugegeben wird.

In einer sechsundzwanzigsten Ausführungsform betrifft die Erfindung ein Verfahren gemäß einer der ersten bis fünfundzwanzigsten Ausführungsform, wobei das Polyesterpolyol kontinuierlich aus dem Reaktor entnommen wird.

In einer siebenundzwanzigsten Ausführungsform betrifft die Erfindung ein Etheresterol bevorzugt Polyetheresterol erhältlich nach mindestens einer der ersten bis sechsundzwanzigsten Ausführungsform.

In einer achtundzwanzigsten Ausführungsform betrifft die Erfindung ein Verfahren zur Herstellung eines Polyurethans durch Umsetzung des Etheresterol bevorzugt des Polyetheresterol gemäß der siebenundzwanzigsten Ausführungsform mit einem Polyisocyanat.

In einer neunundzwanzigsten Ausführungsform betrifft die Erfindung ein Verfahren gemäß der achtundzwanzigsten Ausführungsform, wobei das Polyisocyanat eine oder mehrere Verbindung(en) ist und ausgewählt wird aus der Gruppe bestehend aus 1,4-Butylendiisocyanat, 1,5-Pentandiisocyanat, 1,6-Hexamethylendiisocyanat (HDI) bzw. deren Dimere, Trimere, Pentamere, Heptamere oder Nonamere oder Gemische derselben, Isophorondiisocyanat (IPDI), 2,2,4- und/oder 2,4,4-Trimethylhexamethylendiisocyanat, die isomeren Bis(4,4'-isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), Alkyl-2,6-diisocyanatohexanoate (Lysindiisocyanate) mit C1 bis C6-Alkylgruppen.

### Beispiele

Die vorliegende Erfindung wird anhand der nachfolgenden Figuren und Beispiele näher erläutert, ohne jedoch darauf beschränkt zu sein.

### Verwendete Ausgangsstoffe

### H-funktionelle Startersubstanz (1): "Starter (1)"

| | |
|---|---|
| Diethylenglycol (DEG) | (Reinheit 99% Sigma-Aldrich) |
| PEG-200 (PEG) | (Sigma-Aldrich) |
| Adipinsäure (AS) | (Reinheit 99,5% (BioXtra), Sigma Aldrich) |
| 1,8 Octandiol (OD) | (Reinheit 98%, Sigma Aldrich GmbH) |

### cyclisches Anhydrid (2): "CA (2)"

| | |
|---|---|
| Bernsteinsäureanhydrid (BSA) | (Reinheit 99%, ABCR) |
| Phthalsäureanhydrid (PSA) | (Reinheit ≥99%, Sigma Aldrich) |

### Alkylenoxid (3): "AO (3)"

| | |
|---|---|
| Ethylenoxid | EO (3.0 Gerling Holz): |

### Katalysatoren: "Kat (4)"

| | |
|---|---|
| Benzyldimethylamin (BDA) | (Reinheit ≥99%, Sigma Aldrich) |
| Trifluormethansulfonsäure (TfOH) | ( Reinheit 98%, Sigma-Aldrich) |

DMC-Katalysator (DM C): In allen Beispielen wurde ein DMC-Katalysator verwendet wurde, der gemäß Beispiel 6 in WO 01/80994 A1 hergestellt wurde.

### Beschreibung der Methoden:

OH-Zahl: Die Bestimmung der OH-Zahl erfolgte gemäß der Vorschrift der DIN 53240-1.

COOH-Zahl: Die Bestimmung der Säurezahl erfolgte gemäß DIN EN ISO 2114.

Viskosität: Rheometer MCR 51 der Firma Anton Paar entsprechend DIN 53019-1 mit einem Messkegel CP 50-1, Durchmesser 50 mm, Winkel 1° bei Scherraten von 25, 100, 200 und 500 s⁻¹. Die erfindungsgemäßen und nicht erfindungsgemäßen Polyole zeigen von der Scherrate unabhängige Viskositätswerte.

Gel-Permeations-Chromatographie (GPC): Die Messungen erfolgten auf einem Agilent 1200 Series (G1311A Bin Pump, G1313A ALS, G1362A RID), Detektion über RID; Elutionsmittel: Tetrahydrofuran (GPC grade), Flussrate 1.0 mL/min bei 40°C Säulentemperatur; Säulenkombination: 2 × PSS SDV Vorsäule 100 Å (5 µm), 2× PSS SDV 1000 Å (5 µm). Zur Kalibrierung wurde das ReadyCal-Kit Poly(styrene) low im Bereich Mp = 266 - 66000 Da von "PSS Polymer Standards Service" verwendet. Als Messaufnahme- und Auswertungssoftware wurde das Programmpaket "PSS WinGPC Unity" verwendet. Der Polydispersitätsindex aus gewichtetem (Mw) und Zahlenmittlerem (Mn) Molekulargewicht der Gel-Permeations-Chromatographie ist definiert als Mw/Mn.

### Beispiel 1: EO/BSA-basiertes Polyetheresterpolyol

In einen 2.0 L Stahlreaktor werden Diethylenglycol (110 g, 1,04 mol, 1,00 eq.) Bernsteinsäureanhydrid (311 g, 3,11 mol, 3.00 eq.) und die erste Portion Katalysator (Benzyldimethylamin, 97 mg, 150 ppm) vorgelegt. Der Reaktor wird dicht verschlossen und mit N₂ inertisiert (3 × 25 bar N₂ → 1-2 bar N₂). Der Reaktor wird mit N₂-Atmosphäre auf 125 °C erhitzt um das Bernsteinsäureanhydrid zu schmelzen. Es wird anschließend mit 1200 U/min bei 125 °C für 60 min gerührt. Der N₂-Druck wird auf 45 bar eingestellt und bei 125 °C wird Ethylenoxid (114 g, 2,59 mol, 2,50 eq.) für 45 min dosiert. Anschließend wird die Dosierung gestoppt und für 30 min bei 125 °C gerührt. Es erfolgt die Zugabe der zweiten Portion des Katalysators (Benzyldimethylamin, 552 mg, 850 ppm). Anschließend wird weitere 45 min Ethylenoxid dosiert (114 g, 2,59 mol, 2,50 eq.). Die Reaktion wird für 120 min bei 125 °C nachgerührt. Der Reakor wird abgekühlt, entspannt und mit N₂ gespült. Flüchtige Komponenten werden am Vakuum entfernt.

### Beispiel 2: EO/BSA-basiertes Polyetheresterpolyol

Durchführung analog zu Beispiel 1. Die erste Portion Katalysator (Benzyldimethylamin) beträgt 650 mg (1000 ppm) und die zweite Portion 0 mg (0 ppm).

### Beispiel 3: EO/BSA-basiertes Polyetheresterpolyol

Durchführung analog zu Beispiel 1. Die erste Portion Katalysator (Benzyldimethylamin) beträgt 0 mg (0 ppm) und die zweite Portion 975 mg (1500 ppm).

### Beispiel 4: EO/BSA-basiertes Polyetheresterpolyol

Durchführung analog zu Beispiel 1. Die erste Portion Katalysator (Benzyldimethylamin) beträgt 195 mg (300 ppm) und die zweite Portion 779 mg (1200 ppm).

### Beispiel 5: EO/BSA-basiertes Polyetheresterpolyol

In einen 2.0 L Stahlreaktor wird ein Gemisch aus Diethylenglycol (100 g, 0,94 mol, 0,79 eq.), PEG-200 (50 g, 0,25 mol, 0,21 eq.), Bernsteinsäureanhydrid (328 g, 3,27 mol, 3.00 eq.) und die erste Portion Katalysator (Benzyldimethylamin, 0 mg, 0 ppm) vorgelegt. Der Reaktor wird dicht verschlossen und mit N₂ inertisiert (3 × 25 bar N₂ → 1-2 bar N₂). Der Reaktor wird mit N₂-Atmosphäre auf 125 °C erhitzt um das Bernsteinsäureanhydrid zu schmelzen. Es wird anschließend mit 1200 U/min bei 125 °C für 60 min gerührt. Der N₂-Druck wird auf 45 bar eingestellt und bei 125 °C wird Ethylenoxid (95,5 g, 2,17 mol, 1,99 eq.) für 45 min dosiert. Anschließend wird die Dosierung gestoppt und für 30 min bei 125 °C gerührt. Es erfolgt die Zugabe der zweiten Portion des Katalysators (Benzyldimethylamin, 1,00 g, 1500 ppm). Anschließend wird weitere 45 min Ethylenoxid dosiert (95,5 g, 2,17 mol, 1,99 eq.). Die Reaktion wird für 120 min bei 125 °C nachgerührt. Der Reakor wird abgekühlt, entspannt und mit N₂ gespült. Flüchtige Komponenten werden am Vakuum entfernt.

### Vergleichsbeispiel 6: EO/BSA-basiertes Polyetheresterpolyol

In einen 2.0 L Stahlreaktor wird ein Gemisch aus Diethylenglycol (100 g, 0,94 mol, 0,79 eq.), PEG-200 (50 g, 0,25 mol, 0,21 eq.), Bernsteinsäureanhydrid (328 g, 3,27 mol, 3.00 eq.) und die erste Portion Katalysator (Benzyldimethylamin, 1,00 g, 1500 ppm) vorgelegt. Der Reaktor wird dicht verschlossen und mit N₂ inertisiert (3 × 25 bar N₂ → 1-2 bar N₂). Der Reaktor wird mit N₂-Atmosphäre auf 125 °C erhitzt um das Bernsteinsäureanhydrid zu schmelzen. Es wird anschließend mit 1200 U/min bei 125 °C für 60 min gerührt. Der N₂-Druck wird auf 45 bar eingestellt und bei 125 °C wird Ethylenoxid (191 g, 4,34 mol, 3,98 eq.) für 90 min dosiert. Die Reaktion wird für 150 min bei 125 °C nachgerührt. Der Reakor wird abgekühlt, entspannt und mit N₂ gespült. Flüchtige Komponenten werden am Vakuum entfernt.

### Beispiel 7: EO/PSA-basiertes Polyetheresterpolyol

In einen 2.0 L Stahlreaktor wird ein Gemisch aus Diethylenglycol (94,1 g, 0,887 mol, 0,68 eq.), Adipinsäure (75,0 g, 0,425 mol, 0,32 eq.), Phthalsäureanhydrid (270 g, 1,82 mol, 1,39 eq.) und die erste Portion Katalysator (Benzyldimethylamin, 0 mg, 0 ppm) vorgelegt. Der Reaktor wird dicht verschlossen und mit N₂ inertisiert (3 × 25 bar N₂ → 1-2 bar N₂). Der Reaktor wird mit N₂-Atmosphäre auf 135 °C erhitzt um das Phthalsäureanhydrid zu schmelzen. Es wird anschließend mit 1200 U/min bei 135 °C für 60 min gerührt. Der N₂-Druck wird auf 45 bar eingestellt und bei 135 °C wird Ethylenoxid (128 g, 2,91 mol, 2,21 eq.) für 45 min dosiert. Nach Start der Dosierung wird die Temperatur innerhalb von 5-10 min auf 130 °C reduziert. Anschließend wird die Dosierung gestoppt und für 30 min bei 130 °C gerührt. Es erfolgt die Zugabe der zweiten Portion des Katalysators (Benzyldimethylamin, 1,04 g, 1500 ppm). Anschließend wird weitere 45 min bei 130 °C Ethylenoxid dosiert (128 g, 2,91 mol, 2,21 eq.). Die Reaktion wird für 120 min bei 130 °C nachgerührt. Der Reaktor wird abgekühlt, entspannt und mit N₂ gespült. Flüchtige Komponenten werden am Vakuum entfernt.

### Beispiel 8: EO/PSA-basiertes Polyetheresterpolyol

Durchführung analog zu Beispiel 7. Die erste Portion Katalysator (Benzyldimethylamin) beträgt 104 mg (150 ppm) und die zweite Portion 938 mg (1350 ppm).

### Beispiel 9: EO/PSA-basiertes Polyetheresterpolyol

Durchführung analog zu Beispiel 7. Die erste Portion Katalysator (Benzyldimethylamin) beträgt 208 mg (300 ppm) und die zweite Portion 833 mg (1200 ppm).

### Vergleichsbeispiel 10: EO/BSA-basiertes Polyetheresterpolyol

In einen 300 mL Stahlreaktor werden Diethylenglycol (16,7 g, 0,16 mol, 1,00 eq.) Bernsteinsäureanhydrid (47,2 g, 0,47 mol, 3.00 eq.) und die erste Portion Katalysator (Trifluormethansulfonsäure, 148 mg, 1500 ppm) vorgelegt. Der Reaktor wird dicht verschlossen und mit N₂ inertisiert (3 × 25 bar N₂ → 1-2 bar N₂). Der Reaktor wird mit N₂-Atmosphäre auf 125 °C erhitzt um das Bernsteinsäureanhydrid zu schmelzen. Es wird anschließend mit 1200 U/min bei 125 °C für 60 min gerührt. Der N₂-Druck wird auf 45 bar eingestellt und bei 125 °C wird Ethylenoxid (34,7 g, 2,59 mol, 5,00 eq.) für 90 min dosiert. Die Reaktion wird für 150 min bei 125 °C nachgerührt. Der Reaktor wird abgekühlt, entspannt und mit N₂ gespült. Flüchtige Komponenten werden am Vakuum entfernt.

### Vergleichsbeispiel 11: EO/PSA-basiertes Polyetheresterpolyol

In einen 300 mL Stahlreaktor werden ein Gemisch aus Diethylenglycol (12,6 g, 0,118 mol, 0,68 eq.), Adipinsäure (10,0 g, 0,060 mol, 0,32 eq.), Phthalsäureanhydrid (36,0 g, 0,243 mol, 1,39 eq.) und Katalysator (Trifluormethansulfonsäure, 0,140 mg, 1500 ppm) vorgelegt. Der Reaktor wird dicht verschlossen und mit N₂ inertisiert (3 × 25 bar N₂ → 1-2 bar N₂). Der Reaktor wird mit N₂-Atmosphäre auf 135 °C erhitzt um das Phthalsäureanhydrid zu schmelzen. Es wird anschließend mit 1200 U/min bei 135 °C für 60 min gerührt. Der N₂-Druck wird auf 45 bar eingestellt und bei 135 °C wird Ethylenoxid (34,1 g, 0,77 mol, 2,21 eq.) für 90 min dosiert. Nach Start der Dosierung wird die Temperatur innerhalb von 5-10 min auf 130 °C reduziert. Die Reaktion wird für 150 min bei 130 °C nachgerührt. Der Reaktor wird abgekühlt, entspannt und mit N₂ gespült. Flüchtige Komponenten werden am Vakuum entfernt.

### Vergleichsbeispiel 12: EO/BSA-basiertes Polyetheresterpolyol

In einen 300 mL Stahlreaktor werden Diethylenglycol (16,7 g, 0,16 mol, 1,00 eq.) Bernsteinsäureanhydrid (47,2 g, 0,47 mol, 3.00 eq.) und die erste Portion Katalysator (DMC, 148 mg, 1500 ppm) vorgelegt. Der Reaktor wird dicht verschlossen und mit N₂ inertisiert (3 × 25 bar N₂ → 1-2 bar N₂). Der Reaktor wird mit N₂-Atmosphäre auf 125 °C erhitzt um das Bernsteinsäureanhydrid zu schmelzen. Es wird anschließend mit 1200 U/min bei 125 °C für 60 min gerührt. Der N₂-Druck wird auf 45 bar eingestellt und bei 125 °C wird Ethylenoxid (34,7 g, 2,59 mol, 5,00 eq.) für 90 min dosiert. Die Reaktion wird für 150 min bei 125 °C nachgerührt. Der Reaktor wird abgekühlt, entspannt und mit N₂ gespült. Flüchtige Komponenten werden am Vakuum entfernt. Es zeigt sich, dass keine Reaktion stattgefunden hat.

In einem weiteren Experiment wurde der DMC-Katalysator erst direkt vor der EO-Zugabe zur Reaktionsmischung gegeben, auch hier war der Umsatz von EO und Bernsteinsäureanhydrid unvollständig.

**Tabelle 1: Vergleich der Versuche 1 bis 12.**

| Bsp. | Starter (1) [eq.] | CA (2) [eq.] | AO (3) [eq.] | Kat (4) | m(3-1) [mol-%] | m(3-2) [mol-%] | m(4-1) [mol-%] | m(4-2) [mol-%] | X(EO)^{[a]} [%] | OH^{#[b]} [mg/g] | COOH^{#} [mg/g] | Visk.^{[c]} [mPas] | Mₙ ^{[d]} [g/mol] | D^{[d]} |
|---|---|---|---|---|---|---|---|---|---|---|---|---|---|---|
| 1 | DEG (1.00) | SA (3.11) | EO (5.00) | BDA | 50 | 50 | 15 | 85 | 87 | 208 | 1.9 | 2990 | 870 | 1.59 |
| 2 (Vgl.) | DEG (1.00) | SA (3.11) | EO (5.00) | BDA | 50 | 50 | 100 | 0 | 70 | 206 | 0.1 | 4250 | 870 | 1.58 |
| 3 | DEG (1.00) | SA (3.11) | EO (5.00) | BDA | 50 | 50 | 0 | 100 | 79 | 215 | 1.1 | 3280 | 800 | 1.59 |
| 4 | DEG (1.00) | SA (3.11) | EO (5.00) | BDA | 50 | 50 | 20 | 80 | 77 | 206 | 1.7 | 3900 | 830 | 1.60 |
| 5 | DEG: 67 wt.-% | SA (3.00) | EO (4.00) | BDA | 50 | 50 | 0 | 100 | 95 | 212 | 0.4 | 1680 | 870 | 1.48 |
| | PEG: 33 wt.-% ∑ (1.00 eq) | | | | | | | | | | | | | |
| 6 (Vgl.) | DEG: 67 wt.-% | SA (3.00) | EO (4.00) | BDA | 50 | 50 | 100 | 0 | 86 | 234 | 0.2 | fest (Tₘ: 70 °C) | 820 | 1.52 |
| | PEG: 33 wt.-% ∑ (1.00 eq) | | | | | | | | | | | | | |
| 7 | DEG: 44 wt.-% | PSA (1.36) | EO (4.34) | BDA | 33 | 67 | 0 | 100 | 90 | 251 | 0.7 | 4870 | 670 | 1.42 |
| | AS: 56 wt.-% ∑ (1.00 eq) | | | | | | | | | | | | | |
| 8 | DEG: 44 wt.-% | PSA (1.36) | EO (4.34) | BDA | 33 | 67 | 10 | 90 | 86 | 258 | 0.5 | 6060 | 660 | 1.45 |
| | AS: 56 wt.-% ∑ (1.00 eq) | | | | | | | | | | | | | |
| 9 | DEG: 44 wt.-% | PSA (1.36) | EO (4.34) | BDA | 33 | 67 | 20 | 80 | 80 | 254 | 1.6 | 6130 | 640 | 1.44 |
| | AS: 56 wt.-% ∑ (1.00 eq) | | | | | | | | | | | | | |
| 10 (Vgl.) | DEG (1.00) | SA (3.11) | EO (5.00) | TfOH | 0 | 100 | 100 | 0 | n.d. | n.d. | 44 | 5170 | 770 | 1.94 |
| 11 (Vgl.) | DEG: 44 wt.-% | PSA (1.36) | EO (4.34) | TfOH | 0 | 100 | 100 | 0 | n.d. | n.d. | 47 | 7940 | 560 | 1.83 |
| | AS: 56 wt.-% ∑ (1.00 eq) | | | | | | | | | | | | | |
| 12 (Vgl.) | OD(1.00 eq) | SA (3.11) | EO (5.00) | DMC | 0 | 100 | 100 | 0 | _[e] | _[e] | _[e] | _[e] | _[e] | _[e] |

| | | | | | | | | | | | | | | |
|---|---|---|---|---|---|---|---|---|---|---|---|---|---|---|
| [a]Ethylenoxid Umsatz X(EO) [b]Summe aus der gemessenen OH# nach DIN 53240-1 und der ermittelten COOH# nach DIN EN ISO 2114; [c] Viskosität ermittelt über Rheometer MCR 51 der Firma Anton Paar entsprechend DIN 53019-1 bei 25°C;_[d]ermittelt über GPC-Analyse in THF, [e]unvollständige Umsetzung der Edukte; n.d. - nicht ermittelt. | | | | | | | | | | | | | | |

## Patentansprüche

1. Verfahren zur Herstellung eines Etheresterols, bevorzugt eines Polyetheresterols, durch Umsetzung einer H-funktionellen Startersubstanz (1) mit einem cyclischen Anhydrid (2) und einem Alkylenoxid (3) in Gegenwart eines Katalysators (4), wobei das Alkylenoxid (3) in der Gesamtmenge (m3) in mindestens zwei Teilmengen (m3-1) und (m3-2) zugegeben wird;
wobei der Katalysator (4) in der Gesamtmenge (m4) in mindestens einer Teilmenge (m4-2) zugegeben wird;
wobei die Teilmenge (m4-2) des Katalysators (4) zeitlich nach der ersten Teilmenge (m3-1) des Alkylenoxids (4) zugegeben wird;
und wobei die Zugabe der Gesamtmenge (m4) des Katalysators (4) zeitlich vor der Zugabe der Gesamtmenge (m3) des Alkylenoxids (3) abgeschlossen ist;
und wobei der Katalysator (4) ein tertiäres Amin ist.

2. Verfahren gemäß Anspruch 1 umfassend folgende Schritte
i) Umsetzen der H-funktionellen Startersubstanz (1) des cyclischen Anhydrids (2) und der ersten Teilmenge (m3-1) des Alkylenoxids (3) unter Bildung eines Gemisches (i)
ii) Zugabe der Teilmenge (m4-2) des Katalysators (4) zur Verbindung (i) unter Bildung einer Mischung (ii)
iii) Umsetzen der Mischung (ii) mit der zweiten Teilmenge (m3-2) des Alkylenoxids (3) unter Bildung des Etheresterols, bevorzugt eines Polyetheresterols.

3. Verfahren gemäß Anspruch 2, wobei eine Teilmenge (m4-1) des Katalysators (4) in Schritt i) zugegeben wird.

4. Verfahren gemäß Anspruch 1, umfassend
α) Umsetzen der Startersubstanz (1) und des cyclischen Anhydrids (2) unter Bildung eines Gemisches (α)
(3) Zugabe der ersten Teilmenge (m3-1) des Alkylenoxids (3) zur Komponente (α) unter Bildung einer Verbindung (β)
γ) Zugabe der Teilmenge (m4-2) des Katalysators (4) zur Verbindung (β) unter Bildung einer Mischung (γ)
δ) Umsetzen der Mischung (γ) mit der zweiten Teilmenge (m3-2) des Alkylenoxids (3) unter Bildung des Etheresterols, bevorzugt eines Polyetheresterols.

5. Verfahren gemäß Anspruch 4, wobei eine Teilmenge (m4-1) des Katalysators (4) in Schritt α) zugegeben wird.

6. Verfahren gemäß Anspruch 3 oder 5, wobei 50,1 mol-% bis 100 mol-% bevorzugt 60 mol-% bis 100 mol-% der Teilmenge (m4-2) des Katalysators bezogen auf die Summe der Teilmenge (m4-1) und Teilmenge (m4-2) zugegeben wird.

7. Verfahren gemäß einem der Ansprüche 1 bis 6, wobei die H-funktionelle Startersubstanz (1) eine OH-funktionelle Startersubstanz(1-1), eine NH2-funktionelle Startersubstanz (1-2), eine NH-funktionelle Startersubstanz (1-3) und/oder eine COOH funktionelle Startersubstanz (1-4) bevorzugt eine OH-funktionelle Startersubstanz (1-1) ist.

8. Verfahren gemäß einem der Ansprüche 1 bis 7, wobei das Alkylenoxid (3) Propylenoxid und/oder Ethylenoxid bevorzugt Ethylenoxid ist.

9. Verfahren gemäß einem der Ansprüche 1 bis 8, wobei das tertiäre Amin eine oder mehrere Verbindung(en) und wird ausgewählt aus der Gruppe bestehend aus Trimethylamin Triethylendiamin, Tripropylamin, Tributylamin, Tripentylamin, Trihexylamin, Triphenylamin, Dimethylethylamin, N,N-Dimethylcyclohexylamin, Tetramethylendiamin, 1-Methyl-4-dimethylaminoethylpiperazin, Triethylamin, Tripopylamin, Tributylamin, Dimethylbutylamin, N,N-Dimethylbenzylamin, N,N-Dimethylcyclohexylamin, N,N',N"-Tris-(dimethylaminopropyl)hexahydrotriazin, Dimethylaminopropylformamid, N,N,N',N'-Tetramethylethylendiamin, N,N,N',N'-Tetramethylbutandiamin, Tetramethylhexandiamin, Pentamethyldiethylentriamin, Tetramethyldiaminoethylether, Dimethylpiperazin, 1,2-Dimethylimidazol, 1-Azabicyclo[3.3.0]octan, Bis-(dimethylaminopropyl)-harnstoff, Bis-(dimethylaminoethyl)-ether N-Methylmorpholin, N-Ethylmorpholin, N-Cyclohexylmorpholin, 2,3-Dimethyl-3,4,5,6-tetrahydropyrimidin, Triethanolamin, Diethanolamin, Triisopropanolamin, N-Methyldiethanolamin, N-Ethyldiethanolamin, Dimethylethanolamin, 1,8-Diazabicyclo[5.4.0]undec-7-en (DBU), 1,5,7-Triazabicyclo[4.4.0]dec-5-en (TBD), 1,4-Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, 4(5)Phenylimidazol und N,N-dimethylaminopyridin, Guanidin, 1,1,3,3,-Tetramethylguanidin, Pyridin, 1-Azanaphthalin (Chinolin), N-Methylpiperidin, N-Methylmorpholin, N, N`-Dimethylpiperazin und N,N-Dimethylanilin bevorzugt Benzyldimethylamin, N,N-Dimethylcyclohexylamin, Diazabicyclo[2.2.2]octan (DABCO), Imidazol, 1-Methylimidazol, 2-Methylimidazol, 4(5)-Methylimidazol, 2,4(5)Dimethylimidazol, 1-Ethylimidazol, 2-Ethylimidazol, 1-Phenylimidazol, 2-Phenylimidazol, und 4(5)Phenylimidazol.

10. Verfahren gemäß einem der Ansprüche 1 bis 9, wobei das Stoffmengenverhältnis des cyclischen Anhydrids (2) zur Starterfunktionalität der H-funktionellen Startersubstanz (1) zwischen 0,5 zu 1 bis 20 zu 1, bevorzugt zwischen 0,5 zu 1 bis 10 zu 1 ist.

11. Verfahren gemäß einem der Ansprüche 7 bis 10, wobei die H-funktionelle Startersubstanz (1) eine OH-funktionelle Startersubstanz (1-1) mit terminalen Hydroxylgruppen ist und das Stoffmengenverhältnis des Alkylenoxids (3) zum cyclischen Anhydrid (2) von 1,05 zu 1 bis 3,0 zu 1 , bevorzugt von 1,1 zu 1 bis 2,0 zu 1 ist.

12. Verfahren gemäß einem der Ansprüche 1 bis 11, wobei die H-funktionelle Startersubstanz (1) eine COOH-funktionelle Startersubstanz (1-4) mit Carboxylgruppen ist und das Stoffmengenverhältnis des Alkylenoxids (3) zum cyclischen Anhydrid (2) von 1,5 zu 1 bis 8,0 zu 1, bevorzugt von 1,8 zu 1 bis 5,0 zu 1 ist.

13. Verfahren gemäß einem der Ansprüche 1 bis 12, wobei die Teilmenge (m3-1) 10 bis 95 mol-%, bevorzugt 30 bis 85 mol% bezogen auf die Summe der Teilmengen (m3-1) und (m3-2) des Alkylenoxids (3) sind.

14. Etheresterol bevorzugt Polyetheresterol erhältlich nach mindestens einem der Ansprüche 1 bis 13.

15. Verfahren zur Herstellung eines Polyurethans durch Umsetzung des Etheresterol bevorzugt des Polyetheresterol gemäß Anspruch 14 mit einem Polyisocyanat.

## Claims

1. Process for preparing an etheresterol, preferably a polyetheresterol, by reacting an H-functional starter substance (1) with a cyclic anhydride (2) and an alkylene oxide (3) in the presence of a catalyst (4), wherein the alkylene oxide (3) in the total amount (m3) is added in at least two portions (m3-1) and (m3-2);
wherein the catalyst (4) in the total amount (m4) is added in at least one portion (m4-2);
wherein the portion (m4-2) of the catalyst (4) is added after the first portion (m3-1) of the alkylene oxide (4);
and wherein the addition of the total amount (m4) of the catalyst (4) is concluded before the addition of the total amount (m3) of the alkylene oxide (3); and wherein the catalyst (4) is a tertiary amine.

2. Process according to Claim 1, comprising the following steps:
i) reacting the H-functional starter substance (1), the cyclic anhydride (2) and the first portion (m3-1) of the alkylene oxide (3) to form a mixture (i)
ii) adding the portion (m4-2) of the catalyst (4) to the compound (i) to form a mixture (ii)
iii) reacting the mixture (ii) with the second portion (m3-2) of the alkylene oxide (3) to form the etheresterol, preferably a polyetheresterol.

3. Process according to Claim 2, wherein a portion (m4-1) of the catalyst (4) is added in step i).

4. Process according to Claim 1, comprising
α) reacting the starter substance (1) and the cyclic anhydride (2) to form a mixture (α)
β) adding the first portion (m3-1) of the alkylene oxide (3) to component (α) to form a compound (β)
γ) adding the portion (m4-2) of the catalyst (4) to the compound (β) to form a mixture (γ)
δ) reacting the mixture (γ) with the second portion (m3-2) of the alkylene oxide (3) to form the etheresterol, preferably a polyetheresterol.

5. Process according to Claim 4, wherein a portion (m4-1) of the catalyst (4) is added in step α).

6. Process according to Claim 3 or 5, wherein 50.1 mol% to 100 mol%, preferably 60 mol% to 100 mol%, of the portion (m4-2) of the catalyst, based on the sum total of the portion (m4-1) and portion (m4-2), is added.

7. Process according to any of Claims 1 to 6, wherein the H-functional starter substance (1) is an OH-functional starter substance (1-1), an NH2-functional starter substance (1-2), an NH-functional starter substance (1-3) and/or a COOH-functional starter substance (1-4), preferably an OH-functional starter substance (1-1).

8. Process according to any of Claims 1 to 7, wherein the alkylene oxide (3) is propylene oxide and/or ethylene oxide, preferably ethylene oxide.

9. Process according to any of Claims 1 to 8, wherein the tertiary amine is one or more compound (s) and is selected from the group consisting of trimethylamine, triethylenediamine, tripropylamine, tributylamine, tripentylamine, trihexylamine, triphenylamine, dimethylethylamine, N,N-dimethylcyclohexylamine, tetramethylenediamine, 1-methyl-4-dimethylaminoethylpiperazine, triethylamine, tripropylamine, tributylamine, dimethylbutylamine, N,N-dimethylbenzylamine, N,N-dimethylcyclohexylamine, N,N',N''-tris(dimethylaminopropyl)hexahydrotriazine, dimethylaminopropylformamide, N,N,N',N'-tetramethylethylenediamine, N,N,N',N'-tetramethylbutanediamine, tetramethylhexanediamine, pentamethyldiethylenetriamine, tetramethyldiaminoethyl ether, dimethylpiperazine, 1,2-dimethylimidazole, 1-azabicyclo[3.3.0]octane, bis(dimethylaminopropyl)urea, bis(dimethylaminoethyl) ether, N-methylmorpholine, N-ethylmorpholine, N-cyclohexylmorpholine, 2,3-dimethyl-3,4,5,6-tetrahydropyrimidine, triethanolamine, diethanolamine, triisopropanolamine, N-methyldiethanolamine, N-ethyldiethanolamine, dimethylethanolamine, 1,8-diazabicyclo[5.4.0]undec-7-ene (DBU), 1,5,7-triazabicyclo[4.4.0]dec-5-ene (TBD), 1,4-diazabicyclo[2.2.2]octane (DABCO), imidazole, 1-methylimidazole, 2-methylimidazole, 4(5)-methylimidazole, 2,4(5)-dimethylimidazole, 1-ethylimidazole, 2-ethylimidazole, 1-phenylimidazole, 2-phenylimidazole, 4(5)-phenylimidazole and N,N-dimethylaminopyridine, guanidine, 1,1,3,3-tetramethylguanidine, pyridine, 1-azanaphthalene (quinoline), N-methylpiperidine, N-methylmorpholine, N,N'-dimethylpiperazine and N,N-dimethylaniline, preferably benzyldimethylamine, N,N-dimethylcyclohexylamine, diazabicyclo[2.2.2]octane (DABCO), imidazole, 1-methylimidazole, 2-methylimidazole, 4(5)-methylimidazole, 2,4(5)-dimethylimidazole, 1-ethylimidazole, 2-ethylimidazole, 1-phenylimidazole, 2-phenylimidazole, and 4(5)-phenylimidazole.

10. Process according to any of Claims 1 to 9, wherein the molar ratio of the cyclic anhydride (2) to the starter functionality of the H-functional starter substance (1) is between 0.5:1 and 20:1, preferably between 0.5:1 and 10:1.

11. Process according to any of Claims 7 to 10, wherein the H-functional starter substance (1) is an OH-functional starter substance (1-1) having terminal hydroxyl groups, and the molar ratio of the alkylene oxide (3) to the cyclic anhydride (2) is from 1.05:1 to 3.0:1, preferably from 1.1:1 to 2.0:1.

12. Process according to any of Claims 1 to 11, wherein the H-functional starter substance (1) is a COOH-functional starter substance (1-4) having carboxyl groups, and the molar ratio of the alkylene oxide (3) to the cyclic anhydride (2) is from 1.5:1 to 8.0:1, preferably from 1.8:1 to 5.0:1.

13. Process according to any of Claims 1 to 12, wherein the portion (m3-1) is 10 to 95 mol%, preferably 30 to 85 mol%, based on the sum total of the portions (m3-1) and (m3-2) of the alkylene oxide (3).

14. Etheresterol, preferably polyetheresterol, obtainable according to at least one of Claims 1 to 13.

15. Process for preparing a polyurethane by reacting the etheresterol, preferably the polyetheresterol, according to Claim 14 with a polyisocyanate.

## Revendications

1. Procédé de fabrication d'un étherestérol, de préférence d'un polyétherestérol, par réaction d'une substance de départ (1) à fonctionnalité H avec un anhydride cyclique (2) et un oxyde d'alkylène (3) en présence d'un catalyseur (4), la quantité totale (m3) de l'oxyde d'alkylène (3) étant ajoutée en au moins deux quantités partielles (m3-1) et (m3-2) ;
dans lequel la quantité totale (m4) du catalyseur (4) est ajoutée en au moins une quantité partielle (m4-2) ; dans lequel la quantité partielle (m4-2) du catalyseur (4) est ajoutée après la première quantité partielle (m3-1) de l'oxyde d'alkylène (4) ;
et dans lequel l'addition de la quantité totale (m4) du catalyseur (4) est terminée avant l'addition de la quantité totale (m3) de l'oxyde d'alkylène (3) ;
et dans lequel le catalyseur (4) est une amine tertiaire.

2. Procédé selon la revendication 1, comprenant les étapes suivantes :
i) réaction de la substance de départ (1) à fonctionnalité H, de l'anhydride cyclique (2) et de la première quantité partielle (m3-1) de l'oxyde d'alkylène (3) avec formation d'un mélange (i)
ii) addition de la quantité partielle (m4-2) du catalyseur (4) au composé (i) avec formation d'un mélange (ii)
iii) réaction du mélange (ii) avec la deuxième quantité partielle (m3-2) de l'oxyde d'alkylène (3) avec formation de l'étherestérol, de préférence d'un polyétherestérol.

3. Procédé selon la revendication 2, dans lequel on ajoute dans l'étape i) une quantité partielle (m4-1) du catalyseur (4).

4. Procédé selon la revendication 1, comprenant
α) la réaction de la substance de départ (1) et de l'anhydride cyclique (2) avec formation d'un mélange (α)
β) l'addition de la première quantité partielle (m3-1) de l'oxyde d'alkylène (3) au composant (α) avec formation d'un composé (β)
γ) l'addition de la quantité partielle (m4-2) du catalyseur (4) au composé (β) avec formation d'un mélange (γ)
δ) réaction du mélange (γ) avec la deuxième quantité partielle (m3-2) de l'oxyde d'alkylène (3) avec formation de l'étherestérol, de préférence d'un polyétherestérol.

5. Procédé selon la revendication 4, dans lequel on ajoute dans l'étape α) une quantité partielle (m4-1) du catalyseur (4).

6. Procédé selon la revendication 3 ou 5, dans lequel on ajoute 50,1 % en moles à 100 % en moles, de préférence 60 % en moles à 100 % en moles de la quantité partielle (m4-2) du catalyseur, par rapport à la somme de la quantité partielle (m4-1) et de la quantité partielle (m4-2).

7. Procédé selon l'une des revendications 1 à 6, dans lequel la substance de départ (1) à fonctionnalité H est une substance de départ (1-1) à fonctionnalité OH, une substance de départ (1-2) à fonctionnalité NH2, une substance de départ (1-3) à fonctionnalité NH et/ou une substance de départ (1-4) à fonctionnalité COOH, de préférence une substance de départ (1-1) à fonctionnalité OH.

8. Procédé selon l'une des revendications 1 à 7, dans lequel l'oxyde d'alkylène (3) est l'oxyde de propylène et/ou l'oxyde d'éthylène, de préférence l'oxyde d'éthylène.

9. Procédé selon l'une des revendications 1 à 8, dans lequel l'amine tertiaire est un ou plusieurs composés et est choisie dans le groupe consistant en les composés suivants : triméthylamine, triéthylènediamine, tripropylamine, tributylamine, tripentylamine, trihexylamine, triphénylamine, diméthyléthylamine, N,N-diméthylcyclohexylamine, tétraméthylènediamine, 1-méthyl-4-diméthylaminoéthylpipérazine, triéthylamine, tripropylamine, tributylamine, diméthylbutylamine, N,N-diméthylbenzylamine, N,N-diméthylcyclohexylamine, N,N',N"-tris-(diméthylaminopropyl)hexahydrotriazine, diméthylaminopropylformamide, N,N,N',N'-tétraméthyléthylènediamine, N,N,N',N'-tétraméthylbutanediamine, tétraméthylhexanediamine, pentaméthyldiéthylènetriamine, tétraméthyldiaminoéthyléther, diméthylpipérazine, 1,2-diméthylimidazole, 1-azabicyclo[3.3.0]octane, bis-(diméthylaminopropyl)-urée, bis-(diméthylaminoéthyl)-éther, N-méthylmorpholine, N-éthylmorpholine, N-cyclohexylmorpholine, 2,3-diméthyl-3,4,5,6-tétrahydropyrimidine, triéthanolamine, diéthanolamine, triisopropanolamine, N-méthyldiéthanolamine, N-éthyldiéthanolamine, diméthyléthanolamine, 1,8-diazabicyclo[5.4.0]undéc-7-ène (DBU), 1,5,7-triazabicyclo[4.4.0]déc-5-ène (TBD), 1,4-diazabicyclo[2.2.2]octane (DABCO), imidazole, 1-méthylimidazole, 2-méthylimidazole, 4(5)-méthylimidazole, 2,4(5)diméthylimidazole, 1-éthylimidazole, 2-éthylimidazole, 1-phénylimidazole, 2-phénylimidazole, 4(5)phénylimidazole et N,N-diméthylaminopyridine, guanidine, 1,1,3,3,-tétraméthylguanidine, pyridine, 1-azanaphtalène, (quinoléine), N-méthylpipéridine, N-méthylmorpholine, N,N'-diméthylpipérazine et N,N-diméthylaniline, de préférence benzyldiméthylamine, N,N-diméthylcyclohexylamine, diazabicyclo[2.2.2]octane (DABCO), imidazole, 1-méthylimidazole, 2-méthylimidazole, 4(5)-méthylimidazole, 2,4(5)diméthylimidazole, 1-éthylimidazole, 2-éthylimidazole, 1-phénylimidazole, 2-phénylimidazole et 4(5)phénylimidazole.

10. Procédé selon l'une des revendications 1 à 9, dans lequel le rapport entre la quantité de l'anhydride cyclique (2) et la fonctionnalité de départ de la substance de départ (1) à fonctionnalité H est compris entre 0,5:1 et 20:1, de préférence entre 0,5:1 et 10:1.

11. Procédé selon l'une des revendications 7 à 10, dans lequel la substance de départ (1) à fonctionnalité H est une substance de départ (1-1) à fonctionnalité OH comportant des groupes hydroxyle terminaux, et le rapport entre la quantité de l'oxyde d'alkylène (3) et celle de l'anhydride cyclique (2) est de 1,05:1 à 3,0:1, de préférence de 1,1:1 à 2,0:1.

12. Procédé selon l'une des revendications 1 à 11, dans lequel la substance de départ (1) à fonctionnalité H est une substance de départ (1-4) à fonctionnalité COOH comportant des groupes carboxyle, et le rapport entre la quantité de l'oxyde d'alkylène (3) et celle de l'anhydride cyclique (2) est de 1,5:1 à 8,0:1, de préférence de 1,8:1 à 5,0:1.

13. Procédé selon l'une des revendications 1 à 12, dans lequel la quantité partielle (m3-1) est de 10 à 95 % en moles, de préférence de 30 à 85 % en moles par rapport à la somme des quantités partielles (m3-1) et (m3-2) de l'oxyde d'alkylène (3).

14. Étherestérol, de préférence polyestérol, pouvant être obtenu selon au moins l'une des revendications 1 à 13.

15. Procédé de fabrication d'un polyuréthane par réaction de l'étherestérol, de préférence du polyétherestérol selon la revendication 14, avec un polyisocyanate.
